Europäisches Patentamt

European Patent Office

Office européen des brevets

(11) Veröffentlichungsnummer : **0 150 489**
**B1**

(12) **EUROPÄISCHE PATENTSCHRIFT**

(45) Veröffentlichungstag der Patentschrift :
15.03.89

(51) Int. Cl.⁴ : **G 01 N 15/06**

(21) Anmeldenummer : **84116237.3**

(22) Anmeldetag : **22.12.84**

(54) **Dieselrauchmessgerät.**

(30) Priorität : **27.01.84 DE 3402747**

(43) Veröffentlichungstag der Anmeldung :
**07.08.85 Patentblatt 85/32**

(45) Bekanntmachung des Hinweises auf die Patenterteilung : **15.03.89 Patentblatt 89/11**

(84) Benannte Vertragsstaaten :
**AT DE GB**

(56) Entgegenhaltungen :
**DE--B-- 1 164 126**
**FR--A-- 1 381 556**
**FR--A-- 2 272 388**
**GB--A-- 1 423 008**
**US--A-- 2 597 350**
**US--A-- 3 167 949**
**US--A-- 4 391 151**

(73) Patentinhaber : **ROBERT BOSCH GMBH**
**Postfach 50**
**D-7000 Stuttgart 1 (DE)**

(72) Erfinder : **Gustain, Romuald**
**Esslingerstrasse 64**
**D-7310 Plochingen (DE)**

EP 0 150 489 B1

Jouve, 18, rue St-Denis, 75001 Paris, France

**Beschreibung**

Die Erfindung geht aus von einer Vorrichtung zur Erfassung des Dieselrauches einer Brennkraftmaschine nach der im Oberbegriff des Anspruchs 1 angegebenen Gattung.

Aus der DE-B-1 164 126 ist eine derartige Vorrichtung zur Erfassung des Dieselrauches bekannt, bei der in einem gehäusefesten Flansch ein radial zu einer Sacklochbohrung verlaufender, deren Boden tangierender Schlitz ausgebildet ist, in den das zu schwärzende Filterpapier eingeführt wird. Um eine gleichmäßige und dichte Anpressung des Filterpapiers für reproduzierbare Messungen zu gewährleisten, ist in der Sacklochbohrung ein Anschlußstutzen längsbeweglich geführt, der von einer Feder gegen den Boden gedrückt wird und von einem Handhebel in Gegenrichtung bewegbar ist, wodurch eine Spannvorrichtung für das Filterpapier gebildet wird. Dabei führt durch den Anschlußstutzen und den Flansch ein gerader, bohrungsförmiger Abgasweg, der anschließend in einen vom Flansch abgedeckten Zylinderraum mündet. Diese Bauart mit radialem Schlitz durch den bohrungsförmigen Abgasweg baut relativ aufwendig und hat auch den Nachteil, daß nur ein relativ kleiner Berußungsdurchmesser entsprechend dem Querschnitt der Kanalbohrung zur Verfügung steht. Unterschiedliche Meßverfahren sind hier nicht beabsichtigt ; zudem ist in dem Schlitz die einwandfreie Lage des Filterpapiers von außen kaum einsehbar, was zu Fehlmessungen führen kann.

Ferner ist auch ein Dieselrauchmeßgerät bekannt, bei dem das Einlegen des Filterpapieres dergestalt erfolgt, daß eine Verschraubung geöffnet wird, das Filterpapier eingelegt und danach die Verschraubung verschlossen wird. Es hat sich nunmehr gezeigt, daß je nach Temperament des Bedienenden diese Verschraubung unterschiedlich stark geschlossen wurde. Während sie einmal fest angezogen war, wurde sie ein anderes Mal nur leicht angezogen, so daß seitlich Dieselrauch entweichen konnte bzw. Fremdluft angesaugt wurde. Dies verfälschte jedoch das Meßergebnis. In vielen Fällen hat es sich auch als zu teuer erwiesen, für jede Testmethode ein eigenes Dieselrauchmeßgerät anzuschaffen. Dies war jedoch unumgänglich, da die Dieselrauchmeßgeräte, die für den Test bei konstanter Belastung des Motors geeignet waren, nicht dazu geeignet waren, einen Schnelltest bei freier Beschleunigung des Motors durchzuführen. Das gleiche galt auch umgekehrt. Die Folge war, daß mit ein und demselben Gerät die verschiedenen Testverfahren durchgeführt wurden, wobei natürlich dann Fehler auftraten, wenn das Meßgerät verwendet wurde, das für das spezielle Testverfahren nicht vorgesehen war.

Ferner ist aus der FR-A-2 272 388 eine Vorrichtung zur Rauchmessung bekannt, bei der über einen radial verlaufenden Schlitz ein Filterpapier quer in den Abgasweg einführbar ist, wobei mit Hilfe eines Magnetantriebs und Federabstützung eine gleichmäßige Anpressung des Filterpapiers erreicht wird. Als Berußungsdurchmesser steht lediglich ein relativ kleiner Bohrungsquerschnitt eines durchgehenden Abgaskanals zur Verfügung, so daß unterschiedliche Meßverfahren auch hier nicht anwendbar sind ; zudem erfordert der Magnetantrieb hohen Bauaufwand.

Die erfindungsgemäße Vorrichtung zur Erfassung des Dieselrauchs einer Brennkraftmaschine mit den kennzeichnenden Merkmalen des Anspruchs 1 hat demgegenüber den Vorteil, daß neben einer gleichmäßigen Einspannung des Filterpapiers auch bei unterschiedlicher Handhabung der Vorrichtung reproduzierbare Meßergebnisse zu erzielen sind, wobei durch die leichte Austauschbarkeit der Filterpapiere eine schnelle Meßfolge und ein schneller Meßartwechsel möglich ist. So ist die Vorrichtung auch dann anwendbar, wenn das Filterpapier in eine Halterung eingelegt ist, die den Berußungsdurchmesser reduziert. Durch diese Maßnahme wird erreicht, daß sowohl der Test bei konstanter Leistung des Motors als auch der Schnelltest bei freier Beschleunigung des Motors durchführbar ist, je nach dem, ob die Halterung verwendet wird oder nicht. Das Meßergebnis wird noch weiter verbessert, wenn in die Halterung eine Drosselbohrung eingebracht ist, durch die die Ansaugzeit verlängert wird.

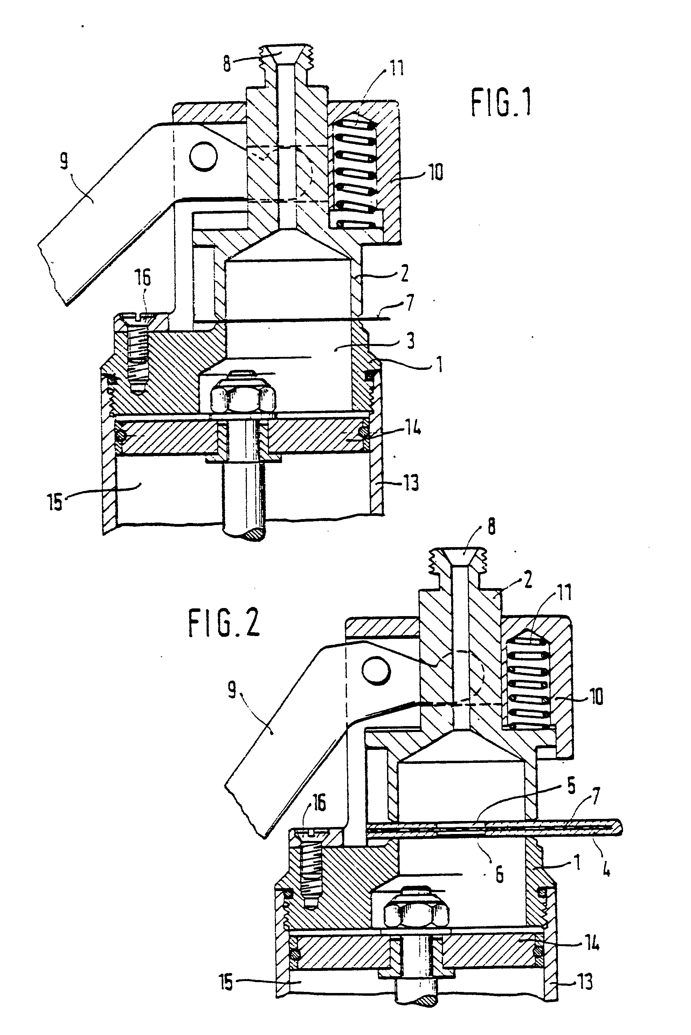

Zwei Ausführungsbeispiele der Erfindung sind in der Zeichnung dargestellt und in der nachfolgenden Beschreibung näher erläutert. Es zeigen Figur 1 ein erstes Ausführungsbeispiel der Erfindung und Figur 2 ein zweites Ausführungsbeispiel der Erfindung.

Die Figur 1 zeigt das erfindungswesentliche Oberteil einer vorrichtung zur Erfassung des Dieselrauches. Das Meßgerät weist ein Anschlußstück 2 auf, das beweglich in einem Zylinderkopf 10 gelagert ist. Das Anschlußstück 2 hat eine Mittenbohrung 8, an deren oberem Ende der Abgaszuleitungsschlauch angeschlossen wird. Nach unten erweitert sich der Bohrungsdurchmesser des Anschlußstückes auf etwa 30 mm. Das Anschlußstück 2 weist des weiteren zwei Einbuchtungen auf, in die gabelförmig ein Hebel 9 hineinragt. Der Hebel 9 und das Anschlußstück 2 sind in dem Zylinderkopf 10 geführt und gehaltert. In drei Sackbohrungen des Zylinderkopfes 10 sind drei Federn 11 eingelegt, die das Anschlußstück 2 nach unten drücken. Der Zylinderkopf 10 mit dem Anschlußstück 2 ist mittels einer Verschraubung am Gewindeflansch 1 befestigt. An dem Gewindeflansch 1 ist ein Zylinderrohr 13 angebracht, in dem sich eine Pumpenhalterung 14 befindet. Durch die Länge und den Durchmesser des Zylinderrohres 13 wird das Luftvolumen bestimmt, das maximal ansaugbar ist. Zwischen dem Anschlußstück 2 und dem Gewindeflansch 1 ist das Filterpapier 7 eingelegt.

Die in Figur 1 gezeigte Einrichtung ist dazu geeignet, eine Messung bei konstanter Belastung durchzuführen. Hierzu wird mittels des Hebels 9 das Anschlußstück 2 abgehoben und das Filterpapier 7 eingelegt. Durch die Feder 11 wird beim Loslassen des Hebels 9 das Anschlußstück 2 mit definierter Kraft auf den Gewindeflansch 1 gepreßt. Zur Prüfung löst man einen durch Federkraft vorgespannten Kolben aus, der hier nicht dargestellt ist und im Bereich des Zylinderrohres 13 untergebracht ist, durch den eine vorgegebene Menge Abgas durch das im Pumpenkopf eingespannte Filterpapier gesaugt wird. Das Gas gelangt dabei durch den Ansaugstutzen 8 in den Gasraum 3. Hierbei wird nun das Filterpapier 7 je nach dem Rußanteil des Abgases mehr oder minder stark geschwärzt, was mittels einer elektrischen Auswertevorrichtung oder durch Vergleich mit Skalen ausgewertet wird. Auf diese Art und Weise ist bei einer konstanten Belastung des Motors der Rußanteil bestimmbar.

In Figur 2 ist wiederum der obere Teil einer Vorrichtung zur Erfassung des Diesdrauches dargestellt, wie es bereits anhand der Figur 1 beschrieben worden ist. Statt des Filterpapiers 7 ist bei dem Ausführungsbeispiel nach Figur 2 jedoch eine Halterung 4 zwischen das Anschlußstück 2 und den Gewindeflansch 1 eingebracht. Die Halterung 4 weist eine obere Bohrung 5 auf, durch die der Berußungsdurchmesser von etwa 30 mm im Beispiel nach Figur 1 auf einen Berußungsdurchmesser von etwa 12 mm reduziert ist. Die hintere Seite weist ebenfalls eine Bohrung 6 auf, die für den Gasstrom eine drosselnde Wirkung hat. Dadurch wird die Ansaugzeit verlängert. In der Mitte der Halterung 4 ist wiederum das Filterpapier 7 eingelegt. Durch die erfindungsgemäße Spannvorrichtung ist es gleichgültig, ob das Filterpapier alleine oder in einer Halterung in den Gasraum eingebracht ist. Durch die Spannvorrichtung ist gewährleistet, daß ein fester Verschluß gegeben ist, so daß seitlich kein Gas entweichen kann.

Mit dem in Figur 2 gezeigten Aufbau ist es möglich, einen Schnelltest bei freier Beschleunigung des Motors durchzuführen: Nach Anschluß der Vorrichtung zur Erfassung des Dieselrauches wird zur Ausspülung der Auspuffanlage der Motor dreimal rasch vom Leerlauf auf höchste Drehzahl beschleunigt und dann vor dem nächsten Beschleunigungsspiel die Ansaugpumpe ausgelöst: Anschließend wird der Motor wiederum rasch von Leerlauf auf höchste Drehzahl beschleunigt. Um für die Messung eine ausreichende Zeit zur Verfügung zu haben, ist nach dem Filterpapier eine Drosselbohrung 6 vorgesehen, durch die die Meßzeit von beispielsweise 2 s auf 7 s vergrößert werden kann. diese Drossel ist im einfachsten Fall als Bohrung ausgeführt, jedoch ist es auch möglich, durch Siebe oder ähnliches die gewünschte Drosselwirkung zu erzielen.

In Abhängigkeit davon, ob die Halterung 4 eingelegt ist oder nicht, ist es daher mit der Vorrichtung zur Erfassung des Dieselrauches möglich, den Dieselrauch entweder nach der Beschleunigungsmethode oder bei konstanter Belastung zu messen. Die Vorrichtung ist daher für beide Meßverfahren verwendbar. Mittels des Hebels 9 ist eine günstige Bedienungsmöglichkeit gegeben, ohne daß Teile, die durch die Abgase erhitzt oder verschmutzt sein könnten, berührt werden müssen.

## Patentansprüche

1. Vorrichtung zur Erfassung des Dieselrauches einer Brennkraftmaschine mit einem Ansaugkolben, durch den eine definierte Abgasmenge durch ein Filterpapier (7) angesaugt wird, das für eine Berußung in einer mit definiertem Druck arbeitenden Spannvorrichtung (2, 9, 11) quer in einen Abgasweg einschaltbar ist wobei die Spannvorrichtung (2, 9, 11) ein bewegliches Anschlußstück (2) einen Hebel (9) und Federn (11) aufweist, und das Anschlußtück mittels der Federn (11) gegen einen gehäusefesten Flansch (1) gedrückt wird und zum Einführen des Filterpapiers mittels des Hebels (9) gegen die Kraft der Federn (11) abhebbar ist, wobei der Abgasweg im Anschlußstück (2) eine Mittenbohrung (8) aufweist und in der Ebene des Filterpapiers einen maximalen Berußungsdurchmesser bestimmt, dadurch gekennzeichnet, daß in der Ebene des einzuspannenden Filterpapiers (7) am Anschlußstück (2) und am Flansch (1) ausgebildete hülsenförmige Ränder einen gegenüber der Mittenbohrung (8) um ein Vielfaches aufgeweiteten Gasraumdurchmesser (3) umschließen.

2. Vorrichtung nach Anspruch 1, dadurch gekennzeichnet, daß eine Halterung (4) zur Aufnahme des Filterpapiers (7) vorgesehen ist, die den Berußungsdurchmesser (5) reduziert und insbesondere eine Drosselbohrung (6) aufweist.

## Claims

1. Device for detecting the diesel smoke of an internal-combustion engine, with a suction piston, by means of which a specific quantity of exhaust gas is sucked in through a filter paper (7) which, for sooting purposes, can be inserted transversely into an exhaust-gas path in a clamping device (2, 9, 11) working with a specific pressure, the clamping device (2, 9, 11) having a movable connection piece (2), a lever (9) and springs (11), and the connection piece being pressed by means of the springs (11) against a flange (1) fixed to the housing and being liftable by means of the lever (9) counter to the force of the springs (11) for the introduction of the filter paper, the exhaust-gas path in the connection piece (2) having a centre bore (8) and defining a maximum sooting diameter in the plane of the filter paper, characterized in that, in the plane of the filter paper (7) to be clamped, sleeve-shaped edges formed on the connection piece (2) and on the flange (1) surround a gas-space diameter (3) widened by a multiple relative to the centre bore (8).

2. Device according to Claim 1, characterized in that a mounting (4) for receiving the filter paper (7) is provided, reduces the sooting diameter (5) and, in particular, has a throttle bore (6).

## Revendications

1. Dispositif d'analyse du gaz d'échappement d'un moteur à combustion interne Diesel avec un piston d'aspiration par lequel une quantité de gaz d'échappement définie est aspirée à travers un papier filtre (7) qui peut être introduit pour calaminage en travers d'un passage du gaz d'échappement dans un dispositif de serrage (2, 9, 11) travaillant avec une pression définie, dans lequel le dispositif de serrage (2, 9, 11) présente une pièce de raccordement mobile (2), un levier (9) et des ressorts (11), dans lequel la pièce de raccordement est pressée au moyen des ressorts (11) contre une bride (1) solidaire du carter et peut être soulevée contre l'effort des ressorts (11) à l'aide du levier (9) pour l'introduction du papier filtre, dans lequel le passage des gaz d'échappement présente un alésage central (8) dans la pièce de raccordement (2) et détermine dans le plan du papier filtre un diamètre de calaminage maximal, caractérisé en ce que les bords en forme de douille de la pièce de raccordement (2) et de la bride (1) dans le plan du papier filtre (7) à serrer entourent un diamètre de chambre à gaz (3) multiplié par rapport à l'alésage central (8).

2. Dispositif suivant la revendication 1, caractérisé en ce qu'un support (4) est prévu pour recevoir le papier filtre (7), réduit le diamètre de calaminage (5) et présente en particulier un orifice d'étranglement (6).

FIG.1

FIG.2